Europäisches Patentamt

European Patent Office

Office européen des brevets

(11) Veröffentlichungsnummer: **0 428 818 A2**

## (12) EUROPÄISCHE PATENTANMELDUNG

(21) Anmeldenummer: **90102697.1**

(22) Anmeldetag: **12.02.90**

(51) Int. Cl.5: **G03G 15/00, G03B 27/62**

(30) Priorität: **20.11.89 DE 3938455**

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **SL Copiersysteme GmbH**
**Lehmstrasse 18**
**W-4100 Duisburg(DE)**

(72) Erfinder: **Strewe, Manfred**
**Nordstr. 10**
**W-4005-Meerbusch-Büderich(DE)**

(74) Vertreter: **Bockermann, Rolf et al**
**Patent- und Rechtsanwälte Dr.-Ing.**
**Stuhlmann Dipl.-Ing. Willert Dr.-Ing.**
**Oidtmann Dipl.-Ing. Bockermann Dipl.-Ing.**
**Schneiders Bergstrasse 159 Postfach 10 24**
**50**
**W-4630 Bochum 1(DE)**

(54) **Kopiergerät.**

(57) Das Kopiergerät weist ein Vorlagenglas (2) zur Auflage des zu kopierenden Schriftstücks auf, das an einer Seitenfläche zur Bildung einer Anlagekante (12) frei zugänglich angeordnet ist. Die Seitenfläche ist rechtwinklig zur Auflagefläche angeordnet. Die Dicke des Vorlagenglases (2) ist so gewählt, daß im Bereich der Anlagekante (12) eine Stufe zur Anlage des Falzbereichs einer gebundenen Vorlage gebildet ist. Befestigt wird das Vorlagenglas (2) durch zwei Halte- und Führungsschienen (13), die zugleich die Führung für einen Schieber (17) bilden, mit dem insbesondere beim Kopieren aus gebundenen Vorlagen der von der Vorlage nicht abgedeckte Bereich des Vorlagenglases (2) abgedeckt wird. Der dann noch verbleibende freie Bereich zwischen der Anlagekante (12), dem Schieber (17) und der Vorlage kann an einem Bedienfeld (21), über das Entladelampen ansteuerbar sind, außer Funktion gesetzt werden.

Fig.2

# KOPIERGERAT

Die Erfindung betrifft ein Kopiergerät, insbesondere ein Trockenkopiergerät, gemäß den im Oberbegriff des Anspruchs 1 angegebenen Merkmalen.

Kopiergerate dieser Art arbeiten heutzutage in der Regel nach dem indirekt-elektrostatischen Verfahren (Xerox-Verfahren) und werden in vielen Bereichen zur schnellen und problemlosen Vervielfältigung von druckschriftlichen Vorlagen eingesetzt.

Sie weisen regelmäßig ein Vorlagenglas auf, das zur Auflage des zu kopierenden Schriftstücks vorgesehen ist. Zum Zwecke des Kopierens ist die Vorlage mit der zu kopierenden Seite in Richtung auf das Vorlagenglas an einer duch Markierungen gekennzeichneten und/oder durch eine Anlagekante begrenzten Fläche des Vorlagenglases aufzulegen, wonach die Vorlage optisch abgetastet und in Form eines elektrostatischen Feldes unterschiedlicher Ladung auf einen Zwischenträger übertragen wird. Dieser wird dann entsprechend der Ladungsverteilung mit Farbmaterial (Toner) versehen, das schließlich auf das Papier übertragen und dort fixiert wird. Ein solches Vorlagenglas ist meist bündig in die Oberseite des Kopiergerätes eingelassen. Insbesondere zum Kopieren von Einzelblättern haben sich solche bündig eingelassenen Vorlagengläser bestens bewährt. Auch wenn das zu kopierende Druckstück erheblich kleiner als die vom Kopiergerät optisch abgetastete Fläche des Vorlagenglases ist, so sorgt eine Abdeckung in der Regel in Form eines rückseitig auf die Vorlage aufgebrachten Deckels dafür, daß auch die Flächen neben der Vorlage auf der Kopie weiß und nicht schwarz erscheinen.

Probleme beim Kopieren mit den vorbeschriebenen Geräten treten jedoch regelmäßig dann auf, wenn es gilt, Kopien von gebundenen Vorlagen, wie beispielsweise Büchern, Zeitschriften und dergleichen zu erstellen. Das bündig in das Gehäuse eingegliederte Vorlagenglas gestattet es in der Regel nicht, die gebundene Vorlage so aufzulegen, daß die zu kopierende Seite exakt auf dem Vorlagenglas aufliegt. Der verhältnismäßig breite Buchrücken verdeckt den inneren Rand der Vorlage, so daß ein exaktes Positionieren der Vorlage auf dem Vorlagenglas nicht möglich ist. Ein weiterer Nachteil besteht darin, daß die Seiten im Bereich der Buchmitte, also dort, wo sie gebunden sind, nicht plan am Vorlagenglas aufliegen, so daß die Kopien in diesen Bereichen unvollständig sind. Ein weiteres "Aufbrechen" des Buches, um auch diesen Bereich exakt kopieren zu können, würde die Bindung des Buches zerstören. Es sei an dieser Stelle darauf hingewiesen, daß beim Kopieren von gebundenen Vorlagen mit den vorgeschilderten Kopiergeräten die Bücher stark in Mitleidenschaft gezogen, bei häufigem Kopieren sogar zerstört werden.

Ein erhebliches Problem beim Kopieren von gebundenen Vorlagen tritt insbesondere dann auf, wenn die Vorlage kleiner als der kopierte Bereich des Vorlagenglases ist, da die sonst vorhandene rückseitige Abdeckung des Kopiergeräts nicht in der gewünschten Weise, d. h. direkt neben der Vorlage an das Vorlagenglas anschließend anbringbar ist. Da die Abdeckung aufgrund der Dicke des Buches mit Abstand vom Vorlagenglas angeordnet ist, wird dieser Bereich auf der Kopie in der Regel als tiefschwarzer Rand wiedergegeben. Dieser in der Regel an ein, zwei oder drei Seiten auf tauchende schwarze Rand hat nicht nur den Nachteil, daß die Kopie unansehnlich und unsauber aussieht, sondern bringt insbesondere in technischer Hinsicht einige Probleme mit sich. Neben dem erhöhten Tonerverbrauch und der damit in kürzeren Intervallen erforderlichen Tonernachfüllung und Tonerentsorgung tritt häufig, insbesondere dann, wenn zahlreiche Kopien aus Buchvorlagen kurz hintereinander gemacht werden, das Phänomen auf, daß die Kopien von Mal zu Mal blasser und schlechter lesbar werden, da die Kapazität der Tonerversorgung für eine derartige Menge, wie sie zur Erzeugung dieser tiefschwarzen Randbereiche erforderlich ist, nicht ausgelegt ist. Der erhöhte Tonerverbrauch zieht zudem auch einen erhöhten Entwicklerverbrauch nach sich, was wiederum zu kürzeren Wartungsintervallen und höheren Unterhaltskosten führt. Weiterhin wird durch den vermehrten Tonereinsatz die Papierstaugefahr gefördert, da dann häufiger Tonerablagerungen an den Trennfingern, welche das Papier von den Heizwalzen lösen, festzustellen sind. Tonerablagerungen in diesem Bereich des Geräts führen jedoch zu Störungen im Papiertransport.

Es sind bereits Kopiergeräte auf dem Markt, die die vorgenannten Probleme zum Teil lösen, die jedoch dann entweder in der Handhabung beim Kopieren von Blattvorlagen Nachteile aufweisen oder aber das jeweilige Problem nur unbefriedigend lösen. Sie sind zudem regelmäßig konstruktiv besonders aufwendig und somit teuer.

Es sind Kopiergeräte bekannt, bei denen die Oberseite des Gerätes im Bereich neben dem Vorlagenglas schräg nach unten hin abfällt, um das Auflegen von gebundenen Vorlagen zu erleichtern. Diese schräg abfallenden Flächen haben den Nachteil, daß ein definiertes Anlegen der Vorlage nicht möglich ist und daß häufig ein schmaler Bereich der Vorlage, und zwar nahe der Bindung nicht fotokopiert werden kann, da er sich bereits neben dem Vorlagenglas befindet.

Hiervon ausgehend liegt der Erfindung die Aufgabe zugrunde, ein gattungsgemäßes Kopiergerät so auszubilden, daß die vorgenannten Nachteile weitgehend vermieden werden und bei geringem konstruktiven Aufwand ein sowohl zum Kopieren von Blattvorlagen als auch von gebundenen Vorlagen gleichermaßen geeignetes Kopiergerät geschaffen wird. Weiterhin soll die konstruktive Lösung nicht nur bei Neukonstruktionen anwendbar, sondern auch bei vorhandenen Kopiergeräten im Zuge einer nach Möglichkeit einfachen und billigen Umrüstung zu erzielen sein.

Diese Aufgabe wird bei einem gattungsgemäßen Kopiergerät mit den im kennzeichnenden Teil des Anspruchs 1 aufgeführten Merkmalen gelöst.

Eine Umrüstung eines gattungsgemäßen Kopiergeräts ist mit einem Umrüstsatz, wie er in Anspruch 8 im einzelnen gekennzeichnet ist, in einfacher Weise möglich.

Die erfindungsgemäße Lösung sieht ein Vorlagenglas vor, das mindestens an einer Seitenfläche zur Bildung einer Anlagekante frei zugänglich angeordnet ist und dessen Seitenfläche an dieser Anlagekante etwa rechtwinklig zur Auflagefläche ausgerichtet ist. Weiterhin ist die Dicke des Vorlagenglases so abgestimmt, daß im Bereich der Anlagekante eine Stufe gebildet ist, welche ein definiertes Anlegen einer gebundenen Vorlage erlaubt.

Die durch das Vorlagenglas selbst gebildete Anlagekante erlaubt ein definiertes Anlegen sowohl von ungebundenen als auch von gebundenen Vorlagen. Beim Kopieren einer gebundenen Vorlage wird durch die rechtwinklige Anordnung dieser Kante ein "Aufbrechen" der Vorlage vermieden. Bei entsprechender Einstellung des optischen Systems kann bis an diese Kante heran kopiert werden, so daß auch Seiten aus gebundenen Vorlagen nahezu vollständig, d. h. bis sehr nahe an die Bindestelle heran kopiert werden können. Die erfindungsgemäße Ausbildung des Kopiergeräts ist konstruktiv denkbar einfach und in der Herstellung mit nur geringem Mehraufwand verbunden. Schon Vorlagengläser mit einer Dicke von 20 bis 24 mm sind zur Bildung einer Stufe als Anlagekante, insbesondere zur Anlage des Falzbereiches einer gebundenen Vorlage geeignet und ermöglichen die vorbeschriebene vorteilhafte Handhabung beim Kopieren von gebundenen Vorlagen. Die rechtwinklige Ausbildung der Anlagekante ist fertigungstechnisch besonders einfach herzustellen. Es versteht sich, daß hier selbstverständlich eine kleine Fase vorgesehen werden kann, um ein Ausbrechen der Kante und mögliche Verletzungsgefahren an dieser Kante zu vermeiden.

Die erfindungsgemäße Lösung kann sowohl bei Neukonstruktionen von Kopiergeräten als auch bei einem großen Teil bereits vorhandener Kopiergeräte vorgesehen werden, indem das Kopiergerät mit einem Umrüstsatz, wie er durch einen der Ansprüche 8 bis 11 gekennzeichnet ist, entsprechend umgebaut wird, wie dies weiter unten noch im einzelnen beschrieben ist.

Vorteilhaft ist das Kopiergerät gemäß Anspruch 2 so ausgebildet, daß ein Schieber vorgesehen ist, durch den das Vorlagenglas bereichsweise abdeckbar ist und der in Richtung auf die Anlagekante bzw. in Gegenrichtung verschiebbar ist. Eine solche Ausbildung ist insbesondere dann von Vorteil, wenn die zu kopierende gebundene Vorlage kleiner als die vom Kopiergerät am Vorlagenglas abgetastete Fläche ist. Mittels des Schiebers kann dann das Vorlagenglas bereichsweise abgedeckt werden, um den insbesondere beim Kopieren aus gebundenen Vorlagen sonst entstehenden schwarzen Rand an der der Anlagekante gegenüberliegenden Seite auf der Kopie zu vermeiden. Das aufgeschlagene Buch wird dabei mit seinem Falzbereich auf die Anlagekante gelegt, so daß die zu kopierende Vorlagenseite auf dem Vorlagenglas und die benachbarte Seite auf der freien Seitenfläche an der Anlagekante bzw. auf dem Kopiergerät zur Anlage kommt. Sodann wird der Schieber in Richtung auf die Vorlage geschoben, bis das Vorlagenglas durch die Vorlage einerseits und den Schieber andererseits über seine gesamte Länge abgedeckt ist.

Vorzugsweise ist der Schieber gemäß Anspruch 3 durch eine schienengeführte, das Vorlagenglas über seine gesamte Breite abdeckende Platte gebildet. Es kann sich hierbei entweder um eine starre Platte handeln, die je nach Vorlagengröße mehr oder weniger weit über das Vorlagenglas geschoben wird, oder aber auch um eine flexible Abdeckung, die rolloartig neben dem Vorlagenglas angeordnet und bei Bedarf entsprechend ausgezogen wird.

Beim Kopieren aus gebundenen Vorlagen liegt die Vorlage im Falzbereich an der durch die Stufe gebildeten Anlagekante des Vorlagenglases an. Sofern die Vorlage kleiner als das abgetastete Feld des Vorlagenglases ist, wird eine Randschwärzung der Kopie im Bereich parallel zur Anlagekante, also parallel zum Buchfalz durch den diesen Bereich abdeckenden Schieber vermieden. Je nach Größe der gebundenen Vorlage kann jedoch auch ein Bereich quer zur Anlagekante, also quer zum Buchfalz frei bleiben, der durch den Schieber nicht abdeckbar ist. Um auch in diesem Bereich eine Randschwärzung der Kopie und die damit verbundenen Nachteile wirksam zu vermeiden, sieht die Erfindung eine Weiterbildung gemäß den in Anspruch 4 aufgeführten Merkmalen vor. Durch die einzeln bzw. gruppenweise ansteuerbaren Entladelampen können diese Bereiche am oberen und unteren Rand der Vorlage gezielt auf elektronischem Wege, durch Einschalten der Entladelampen in diesem Bereich vom Kopiervorgang ausgeschlossen werden. Die zwischen der Ladeeinrichtung und der Entwicklereinheit am Zwischenträger angeordneten Entladelampen sorgen in eingeschaltetem Zustand dafür, daß der bereits geladene Zwischenträger in diesen Bereichen neutralisiert und somit nachfolgend nicht mit Tonermaterial behaftet wird, was zur Folge hat, daß die Kopie in diesen Bereichen weiß bleibt. Vorzugsweise wird am Vorlagenglas neben der Anlagekante, die zur Anlage des Falzbereiches vorgesehen ist, eine untere Anlagehilfe vorgesehen, so daß die Entladelampen auch nur im oberen Bereich am Zwischenträger vorgesehen sein müssen, da der untere Bereich dann stets durch die Vorlage selbst abgedeckt wird.

Als Entladelampen werden vorzugsweise Leuchtdioden eingesetzt, die in einer Reihe quer zur Bewegungsrichtung des Zwischenträgers nebeneinander angeordnet werden (Anspruch 5). Die Leuchtdioden sind verhältnismäßig billig in der Herstellung, platzsparend anzuordnen und benötigen geringe Steuerströme, so daß diese Entladelampen zum einen ohne große konstruktive Änderungen in dem besagten Bereich nahe dem Zwischenträger angeordnet werden können und andererseits eine Stromversorgung über das ohnehin vorhandene elektrische Versorgungssystem des Kopiergeräts möglich ist.

Bevorzugt sind die Entladelampen, vorzugsweise Leuchtdioden, auf einer Leiste angeordnet, die ihrerseits an der Entwicklereinheit befestigt ist (Anspruch 6). Hierdurch wird eine gute Zugänglichkeit der Entladelampen gewährleistet, da diese zusammen mit der Entwicklereinheit, die in der Regel seitlich aus dem Chassis des Geräts herausziehbar ist, geprüft, gewartet und ggf. repariert werden kann.

Die Steuerung der Entladelampen kann entweder durch Anordnung entsprechender Sensoren vollautomatisch oder aber, was schon aus Kostengründen zu bevorzugen ist, manuell über ein am Kopiergerät von außen zugänglich angeordnetes Bedienfeld erfolgen. Um hierbei eine Zuordnung zwischen dem Bereich, der durch die jeweilige Entladelampe oder Gruppe von Entladelampen praktisch ausgeschaltet wird, und dem Bedienfeld zu erreichen, ist es zweckmäßig, am Schieber, der bis nahe an die Vorlage herangeführt wird, entsprechende Markierungen anzubringen, die bestimmten Markierungen am Bedienfeld zugeordnet sind, so daß stets ersichtlich ist, welche Entladelampen über welche Schalter am Bedienfeld einzuschalten sind, damit der Bereich oberhalb der gebundenen Vorlage beim Kopiervorgang abgeschaltet bzw. durch das Licht der Entladelampe am Zwischenträger neutralisiert wird (Anspruch 7). Besonders zweckmäßig ist es, das Bedienfeld derart am Kopiergerät anzuordnen, daß eine klare und logische Zuordnung zwischen den Markierungen am Schieber und denen des Bedienfelds gegeben ist.

Die vorstehend beschriebene Erfindung sowie die anhand der Merkmale der Ansprüche 2 bis 7 dargelegten vorteilhaften Weiterbildungen der Erfindung können ganz oder teilweise auch an einem Kopiergerät nach dem Stand der Technik nachträglich verwirklicht werden, wenn ein Umrüstsatz, wie er durch die Merkmale des Anspruchs 8, sowie in vorteilhafter Weiterbildung durch die Merkmale der Ansprüche 9 bis 11 gekennzeichnet ist.

Der Umrüstsatz gemäß Anspruch 8 besteht im wesentlichen aus einem Vorlagenglas und einer Haltevorrichtung zur Befestigung des Vorlagenglases am Kopiergerät. Das Vorlagenglas des Umrüstsatzes wird gegen das vorhandene Vorlagenglas ausgetauscht, so daß dieses nicht mehr bündig innerhalb der Oberseite des Kopiergeräts liegt, sondern erhaben vorsteht und eine rechtwinklige Stufe als Anlagekante, insbesondere für gebundene Vorlagen, bildet, wie dies bereits weiter oben im einzelnen beschrieben ist.

Vorzugsweise besteht die Haltevorrichtung aus zwei Halte-und Führungsschienen, welche das Vorlagenglas an den Seiten quer zu der Anlagekante, an welcher der Falzbereich einer gebundenen Vorlage angelegt wird, übergreifen (Anspruch 9). Diese Halte- und Führungsschienen werden am Chassis des Kopiergeräts bzw. dem Gehäuse des Geräts festgeschraubt oder festgeklebt und halten das Vorlagenglas formschlüssig. Sie können vorteilhaft zugleich eine untere bzw. obere Anlagehilfe bilden.

Zweckmäßigerweise weist auch der Umrüstsatz einen Schieber auf, wie er schon anhand der Ansprüche 2 und 3 weiter oben im einzelnen beschrieben wurde. Ein solcher Schieber kann an der Haltevorrichtung geführt sein, beispielsweise durch eine entsprechende Führung in den Halte- und Führungsschienen (Anspruch 10).

Vorteilhaft weist der Umrüstsatz gemäß Anspruch 11 auch eine Leiste mit nebeneinander angeordneten Entladelampen auf, die zum Einbau nahe dem Zwischenträger im Bereich zwischen der Ladeeinrichtung und der Entwicklereinheit des Kopiergeräts vorgesehen ist, sowie ein zugehöriges und am Kopiergerät anbringbares Bedienfeld, mit dem die Entladelampen gesteuert werden können. Die Entladelampen dienen auch hier zur Vermeidung der schwarzen Ränder im Bereich oberhalb der Vorlage, wie es bereits anhand der Ansprüche 4 bis 7 im einzelnen beschrieben wurde.

Die Erfindung ist nachfolgend anhand eines in den Zeichnungen dargestellten Ausführungsbeispiels näher erläutert.

Es zeigen:
Figur 1 in schematischer Darstellung ein Kopiergerät in Vorderansicht ohne vordere Gehäuseabdeckung;

Figur 2 eine Draufsicht auf das Gerät gemäß Figur 1 und

Figur 3 einen Schnitt durch den oberen Teil des Kopiergeräts gemäß Figur 2 entlang der Schnittlinie III-III in Figur 2.

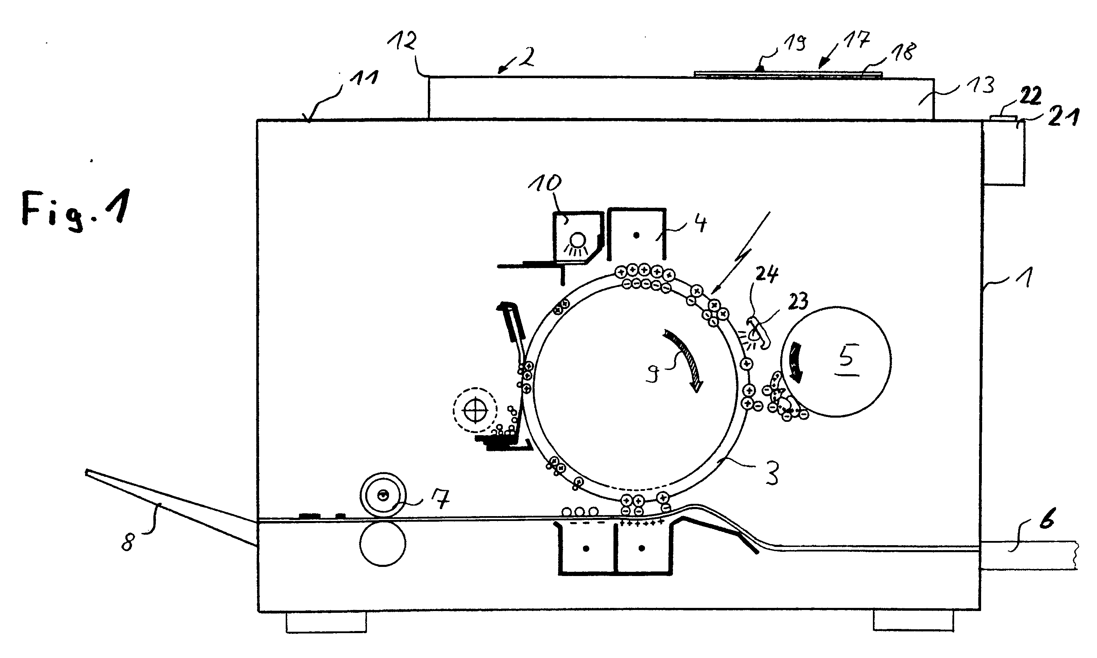

Das anhand der Figuren dargestellte Kopiergerät arbeitet nach dem Xerox-Verfahren, wie es in Figur 1 schematisch dargestellt ist. Das Gerät weist ein Gehäuse 1 auf, an dessen Oberseite ein Vorlagenglas 2 angeordnet ist, auf das die Vorlage zum Zwecke des Kopierens aufzulegen ist. Die Vorlage wird dann optoelektrisch auf einen Zwischenträger 3 übertragen, der zuvor durch eine Ladeeinrichtung 4 elektrostatisch aufgeladen worden ist. Durch Belichtung des Zwischenträgers 3 wird dieser entsprechend der Vorlage bereichsweise entladen und dann einer Entwicklereinheit 5 zugeführt, an der entsprechend der örtlichen Ladung am Zwischenträger umgekehrt geladenes pulverisiertes Farbmaterial (Toner) zugeführt wird. Dieses Farbmaterial bleibt entsprechend der jeweiligen Ladung am Zwischenträger 3 haften, so daß auf dem Zwischenträger 3 eine Abbildung der Vorlage entsteht. Dieses auf dem Zwischenträger 3 befindliche Bild wird dann auf Papier übertragen, das aus einem außen am Kopiergerät ange brachten Vorratsbehälter 6 entnommen und am Zwischenträger 3 entlang geführt wird. Die auf das Papier übertragenen Farbpartikel werden sodann in einer Fixiereinrichtung 7 fixiert und anschließend zu einer außerhalb des Kopiergeräts angebrachten Ablage 8 transportiert.

Der Zwischenträger 3 ist, wie Figur 1 zeigt, als Trommel ausgebildet, die während des Kopiervorgangs in Richtung des Pfeils 9 rotiert. Nachdem das Bild vom Zwischenträger auf das Papier übertragen worden ist, wird die am Zwischenträger 3 befindliche überschüssige Farbe mechanisch entfernt, wonach eine Entladeeinrichtung 10 durchlaufen wird und ein erneuter Kopiervorgang erfolgen kann.

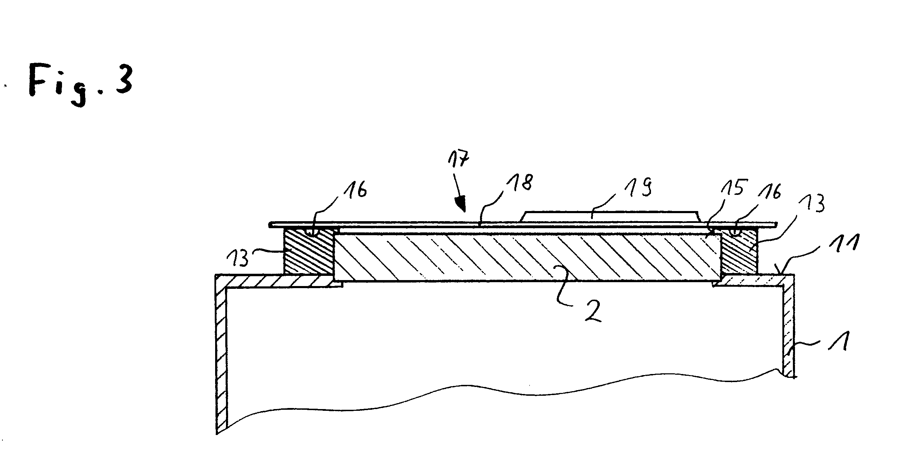

Das Vorlagenglas 2 des dargestellten Kopiergeräts ist nicht, wie sonst üblich, bündig abschließend in das Gehäuse 1 des Kopiergeräts integriert, sondern überragt die Oberseite des Gehäuses 1 erheblich, so daß gegenüber der Gehäuseoberseite 11 eine Stufe 12 gebildet wird, welche eine Anlagekante, insbesondere zur Anlage des Falzbereiches einer gebundenen Vorlage, bildet. Das Vorlagenglas ist quaderförmig ausgebildet, d. h. die Seitenflächen sind senkrecht zur Ober- und Unterseite angeordnet, so daß auch eine rechtwinklige Stufe 12 gebildet ist. Das Vorlagenglas 2 weist bei der dargestellten Ausführung eine Dicke von 24 mm auf. Es wird nach unten hin durch entsprechende Aussparungen in der Oberseite 11 des Gehäuses 1 und nach oben durch zwei im Querschnitt etwa L-förmige Halte- und Führungsschienen 13 gehalten, welche durch nicht dargestellte Schrauben am Gehäuse 1 befestigt sind. Die Halte- und Führungsschienen 13 erstrecken sich über die gesamte Länge des Vorlagenglases und übergreifen dieses geringfügig, wie es anhand von Figur 3 ersichtlich ist. Die der Vorderseite des Kopiergeräts sowie dem an der Oberseite 11 angeordneten Bedienfeld 14 nächstliegende Halte- und Führungsschiene 13 bildet eine Anlagehilfe 15, die in Verbindung mit der Anlagekante 12 eine definierte Anlage sowohl gebundener als auch ungebundener Vorlagen erlaubt.

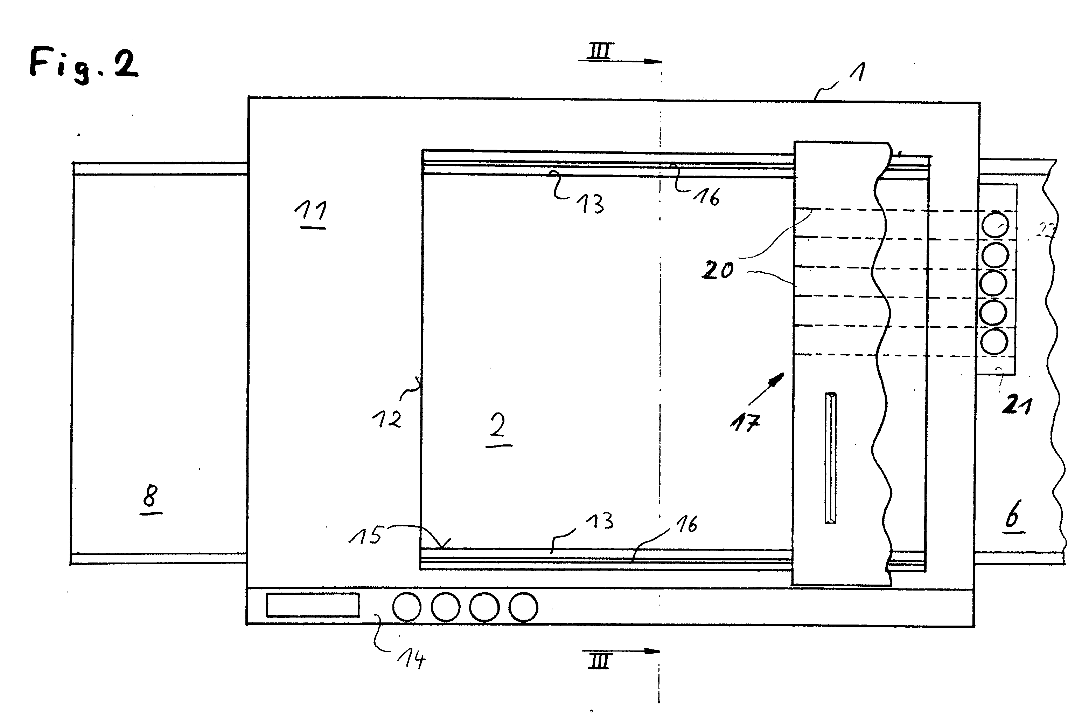

Die Halte- und Führungsschienen 13 weisen in ihrer Oberseite eine im Querschnitt etwa halbkreisförmige Nut 16 auf, die als Führung für einen Schieber 17 vorgesehen sind. Der Schieber 17, der in den Figuren 1 und 2 nur teilweise dargestellt ist, weist eine Platte 18 auf, welche das Vorlagenglas 2 zusammen mit den Halte- und Führungsschienen 13 in Querrichtung (Richtung quer zum Papiertransport) vollständig überspannt. Die (aus den Figuren nicht ersichtliche) Länge des Schiebers 17 ist so gewählt, daß das Vorlagenglas 2 zu etwa zwei Dritteln bis drei Vierteln seiner Länge durch den Schieber abdeckbar ist. Die Platte 18 weist an ihrer Unterseite zwei Führungsleisten auf, die in den Nuten 16 der Halte- und Führungsschienen 13 liegen. An der Oberseite der Platte 18 ist eine Griffhilfe 19 in Form eines prismatischen Stabs angebracht, mit deren Hilfe der Schieber 17 in Richtung auf die Anlagekante 12 oder in Gegenrichtung manuell verschoben werden kann.

Je nach Größe und Bauart des Kopiergeräts kann der Schieber eine einstückige Platte 18 oder aber auch eine klapp- oder faltbare Platte aufweisen, so daß bei nur teilweiser Abdeckung des Vorlagenglases 2 dieser nicht behindernd über das Gehäuse 1 übersteht.

Auf dem Schieber 17 sind Markierungen 20 angebracht, mit deren Hilfe das Vorlagenglas 2 insbesondere in dem von der Anlagehilfe 15 entfernten Bereich in streifenförmige Längsabschnitte einteilbar ist. Diesen Markierungen 20 für die besagten Längsabschnitte am Vorlagenglas 2 sind einem Bedienfeld 21 seitlich am Kopiergerät zugeordnet, das entsprechend den Markierungen 20 angeordnete Schalter 22 aufweist, mit denen Entladelampen 23 angesteuert werden, welche in Form von Leuchtdioden auf einer an der Entwicklereinheit 5 angebrachten Leiste 24 nahe dem Zwischenträger 3 im Bereich zwischen der Ladeeinrichtung 4 und der Entwicklereinheit 5 angeordnet sind. Diese Entladelampen 23 können einzeln bzw. gruppenweise über das Bedienfeld 21 angesteuert werden und bewirken eine bereichsweise Entladung des Zwischenträgers 3, und zwar bevor diesem Farbmaterial zugeführt wird. Die Schalter 22 am Bedienfeld 21 sind logisch verknüpft, so daß bei Betätigung eines mittleren Schalters 22 nicht nur der zugehörige Längsbereich, sondern der gesamte sich daran bis zum nächstliegenden Rand (auf der der Anlagehilfe 15 gegenüberliegenden Seite des Vorlagenglases 2) anschließende Bereich außer Kopierfunktion gesetzt wird.

Die Funktionsweise der vorstehend beschriebenen Neuerungen wird nachfolgend beispielhaft erläutert:

Zum Kopieren aus einer gebundenen Vorlage, beispielsweise einem Buch, wird zunächst dieses aufgeschlagen und mit seinem Falzbereich an die als Stufe ausgebildete Anlagekante 12 angelegt, derart, daß die zu kopierende Seite auf der Oberseite des Vorlagenglases 2 und die benachbarte Seite an der Seitenfläche des Vorlagenglases 2 sowie an der Oberseite 11 des Gehäuses 1 zur Anlage kommt. Dann liegt eine Seite des aufgeschlagenen Buches nahezu vollständig auf dem Vorlagenglas 2, ohne daß der Buchrücken übermäßig gedehnt oder aufgespreizt werden muß. Nachdem diese Anlage erfolgt ist, wird das Buch in Richtung auf die Anlagehilfe 15 geschoben, so daß eine definierte Anlage an zwei rechtwinklig zueinander angeordneten Anlageseiten gegeben ist. Diese beiden mit 12 gekennzeichnete Anlagekante und die mit 15 gekennzeichnete Anlagehilfe begrenzen das Vorlagenfeld (der Bereich der während des Kopiervorgangs optisch abgetastet und kopiert wird) des Vorlagenglases an diesen Seiten.

Um die einleitend beschriebenen schwarzen Ränder, die insbesondere beim Kopieren aus gebundenen Vorlagen, die kleiner als das genormte Vorlagenfeld sind, entstehen, wird nunmehr - anders als bei Einzelblattvorlagen, bei denen nach dem definierten Anlegen der Vorlage der Deckel geschlossen wird - zunächst der Schieber 17 so weit in Richtung auf die Anlagekante 12 geschoben, bis dieser an die Vorlage anschließt. Sodann wird anhand der Markierungen 20 auf dem Schieber 17 festgestellt, welcher Bereich zwischen dem Schieber 17 und der Anlagekante 12 durch die Vorlage selbst nicht abgedeckt wird. Die entsprechenden (diesem nicht abgedeckten Bereich zugeordneten) Schalter 22 werden am Bedienfeld betätigt, so daß nach Auslösen der Starttaste die entsprechenden Entladelampen 23 angesteuert werden, wodurch beim Kopiervorgang ein entsprechender Bereich des Zwischenträgers 3 vorzeitig entladen und somit praktisch außer Betrieb gesetzt wird. Durch den Schieber 17 in Verbindung mit den Entladelampen 23 wird auch beim Kopieren von Vorlagen, die deutlich kleiner als das genormte Vorlagenfeld sind, die sonst übliche Randschwärzung wirksam verhindert.

Mit dem vorbeschriebenen Kopiergerät können auch Einzelblätter kopiert werden, die Anlage erfolgt dann ebenfalls an der Anlagekante 12 sowie der Anlagehilfe 15, dann wird jedoch im Unterschied zum Kopierverfahren aus gebundenen Vorlagen ein den Randbereich abdeckender, an der Unterseite reflektierender, vorzugsweise weißer Deckel geschlossen.

## Bezugszeichenaufstellung

1 - Gehäuse
2 - Vorlagenglas
3 - Zwischenträger
4 - Ladeeinrichtung
5 - Entwicklereinheit
6 - Vorratsbehälter
7 - Fixiereinrichtung
8 - Ablage
9 - Pfeil
10 - Entladeeinrichtung
11 - Gehäuseoberseite
12 - Stufe Anlagekante
13 - Halte- und Führungsschiene
14 - Bedienfeld
15 - Anlagehilfe
16 - Nut
17 - Schieber
18 - Platte
19 - Griffhilfe
20 - Markierungen
21 - Bedienfeld
22 - Schalter
23 - Entladelampen
24 - Leiste

## Ansprüche

1. Kopiergerät, insbesondere Trockenkopiergerät, mit einem Vorlagenglas (2) zur Auflage des zu kopierenden Schriftstücks **dadurch gekennzeichnet,** daß das Vorlagenglas (2) mindestens an einer Seitenfläche zur Bildung einer Anlagekante frei zugänglich angeordnet ist, daß diese Seitenfläche etwa rechtwinklig zur Auflagefläche angeordnet ist, und daß das Vorlagenglas (2) eine solche Dicke aufweist, daß im Bereich der Anlagekante (12) eine Stufe zur Anlage des Falzbereiches einer gebundenen Vorlage gebildet ist.

2. Kopiergerät nach Anspruch 1, **dadurch gekennzeichnet,** daß ein das Vorlagenglas (2) bereichsweise abdeckender Schieber (17) vorgesehen ist, welcher in Richtung auf die Anlagekante (12) sowie in Gegenrichtung verschiebbar ist.

3. Kopiergerät nach Anspruch 2, **dadurch gekennzeichnet,** daß der Schieber (17) durch eine schienengeführte, das Vorlagenglas (2) über seine gesamte Breite abdeckende Platte (18) gebildet ist.

4. Kopiergerät nach einem der Ansprüche 1 bis 3, mit einem Zwischenträger (3), der mittels einer Ladeeinrichtung (4) bereichsweise elektrostatisch aufladbar ist, und mit einer Entwicklereinheit (5), mit der entsprechend der bereichsweisen Ladung Farbmaterial auf den Zwischenträger (3) aufbringbar ist, **dadurch gekennzeichnet,** daß nahe am Zwischenträger (3) im Bereich zwischen der Ladeeinrichtung (4) und der Entwicklereinheit (5) Entladelampen (23) angeordnet sind, welche einzeln und/oder gruppenweise über ein am Gerät (1) angeordnetes Bedienfeld (21) steuerbar sind.

5. Kopiergerät nach Anspruch 4, **dadurch gekennzeichnet,** daß die Entladelampen (23) durch Leuchtdioden gebildet sind, welche in einer Reihe quer zur Bewegungsrichtung (9) des Zwischenträgers (3) nebeneinander angeordnet sind.

6. Kopiergerät nach Anspruch 5 oder 6, **dadurch gekennzeichnet,** daß die Entladelampen (23) auf einer Leiste (24) angeordnet sind, die an der Entwicklereinheit (5) befestigt ist.

7. Kopiergerät nach einem der Ansprüche 4 bis 6, **dadurch gekennzeichnet,** daß der Schieber (17) quer zur Verschieberichtung mit Abstand zueinander angeordnete Markierungen (20) aufweist, welchen entsprechende Markierungen am Bedienfeld (21) zur Steuerung der Entladelampen (23) zugeordnet sind.

8. Umrüstsatz für ein Kopiergerät bestehend aus
a) einem Vorlagenglas (2),
das in seiner Länge und Breite dem vorhandenen Vorlagenglas des umzurüstenden Kopiergeräts entspricht,
und das eine solche Dicke aufweist, daß auf dem Kopiergerät eine Stufe (12) als Anlagekante zur Anlage des Falzbereichs einer gebundenen Vorlage gebildet ist,
und das zumindest im Bereich der Anlagekante (12) etwa rechtwinklig ausgebildet ist,
sowie
b) einer Haltevorrichtung (13) zur Befestigung des Vorlagenglases (2) am Kopiergerät.

9. Umrüstsatz nach Anspruch 8, **dadurch gekennzeichnet,** daß die Haltevorrichtung (2) durch zwei Halte- und Führungsschienen (13) gebildet ist, welche das Vorlagenglas (2) an den Seiten quer zur Anlagekante (12) übergreifen.

10. Umrüstsatz nach Anspruch 8 oder 9, **dadurch gekennzeichnet,** daß ein das Vorlagenglas (2) bereichsweise abdeckender Schieber (17) vorgesehen ist, der in Richtung auf die Anlagekante (12) sowie in Gegenrichtung verschiebbar ist, der an der Haltevorrichtung (13) geführt ist.

11. Umrüstsatz nach einem der Ansprüche 8 bis 10, **dadurch gekennzeichnet,** daß eine Leiste (24) mit daran nebeneinander angeordneten Entladelampen (23) zum Einbau nahe dem Zwischenträger (3) im Bereich zwischen der Ladeeinrichtung (4) und der Entwicklereinheit (5) vorgesehen ist, sowie ein am Kopiergerät anzubringendes Bedienfeld (21) zur Steuerung der Entladelampen (23).

Fig.1

EP 0 428 818 A2

# Fig. 2

EP 0 428 818 A2

**Fig. 3**